# EUROPÄISCHE PATENTSCHRIFT

(11) **EP 4 571 638 B1**
(45) Veröffentlichungstag und Bekanntmachung des Hinweises auf die Patenterteilung: **18.03.2026**
(21) Anmeldenummer: 24211999.8
(22) Anmeldetag: 11.11.2024
(51) Int. Cl.: G06T 7/00

(54) **COMPUTERIMPLEMENTIERTES VERFAHREN UND SYSTEM ZUM INSPIZIEREN MINDESTENS EINES VERSCHLUSSES**
COMPUTER-IMPLEMENTED METHOD AND SYSTEM FOR INSPECTING AT LEAST ONE CLOSURE
PROCÉDÉ MIS EN UVRE PAR ORDINATEUR ET SYSTÈME D'INSPECTION D'AU MOINS UNE FERMETURE

(30) Priorität: 11.12.2023 DE 102023134539
(43) Veröffentlichungstag der Anmeldung: 18.06.2025
(73) Patentinhaber: KHS GmbH, 44143 Dortmund (DE)
(72) Erfinder: Fischer, Jan, 44143 Dortmund (DE); Becker, Kevin, 44143 Dortmund (DE); Fritsche, Claas, 44143 Dortmund (DE); Godau, Christoph, 44143 Dortmund (DE); Kalis, Henning, 44143 Dortmund (DE)

(56) Entgegenhaltungen:
- CN-A- 102 192 911
- DE-A1- 102020 121 088

## Beschreibung

Die Erfindung betrifft ein computerimplementiertes Verfahren und ein System zum Inspizieren mindestens eines Verschlusses.

Nach der Befüllung von Behältern werden diese in der Regel mit Verschlüssen verschlossen. Die Verschlüsse können auch nach dem Öffnen der Behälter an dem Behälter fixiert sein, beispielsweise mit einem Scharnier. Um nach dem Verschließen der Behälter mit dem Verschluss eine Überprüfung des Verschlusses durchführen zu können, werden Behälter nach dem Verschließvorgang inspiziert. Insbesondere werden die Verschlüsse inspiziert, um Beschädigungen der Verschlüsse zu kontrollieren, die beispielsweise Rückschlüsse auf die Dichtigkeit zulassen. Die Inspektion kann beispielsweise mit einer Kamera durchgeführt werden, die Bilddaten des Verschlusses und des Behälters ermittelt. Die Bilddaten können durch computergestützte Verfahren ausgewertet werden.

Aus DE 10 2021 109 286 A1 ist bekannt, die Auswertung der Bilddaten der Verschlüsse mittels eines maschinell eingelernten Verfahrens durchzuführen. Dabei kann mit dem maschinell eingelernten Verfahren die Art des Verschlusses, beispielsweise dessen Form oder dessen Farbe, ermittelt werden.

Das Patentdokument DE 10 2020 121088 A1 offenbart eine Vorrichtung zur Behandlung geschlossener Behälter mit einer Transporteinrichtung, wobei eine Auswerteeinrichtung vorgesehen ist, die dazu konfiguriert ist, die relative Drehposition des Behälters in Bezug auf den auf dem Behälter angeordneten Behälterverschluss anhand eines mit einer Bildaufnahmeeinrichtung aufgenommenen Bildes zu bestimmen (u.U. mit Hilfe eines neuronalen Netzes).

Das Patendokument CN 102 192 911 bezieht sich auf die Qualitätsprüfung von Kronkorken auf Basis maschineller Bildverarbeitung, das Materialfehler erkennt und fehlerhafte Kronkorken ausschleust, wobei mittels Bildverarbeitung die größten Konturen eines Referenz-Kronkorkens extrahiert und eine Rotationsinvarianz-Merkmalsmatrix erstellt werden. Durch den Abgleich der Merkmale des zu prüfenden Kronkorkens mit der Referenz wird festgestellt, ob der Kronkorken den Qualitätsanforderungen entspricht oder ausgeschleust werden muss.

Aufgabe der Erfindung ist es, ein Verfahren bereitzustellen, das die Inspektion der Verschlüsse der Behälter mit erhöhter Effizienz durchführen kann, sodass die Inspektion des Verschlusses zielgerichtet und ganzheitlich erfolgen kann.

Die Aufgabe wird durch die Merkmale der unabhängigen Ansprüche gelöst. Vorteilhafte Weiterbildungen sind Gegenstand der abhängigen Ansprüche sowie der folgenden Beschreibung.

Gemäß einem Aspekt der Erfindung ist ein computerimplementiertes Verfahren zum Inspizieren mindestens eines Verschlusses eines Behälters vorgesehen, wobei sich der Verschluss am Behälter entlang einer Längsachse erstreckt, die sich durch eine Mündungsöffnung des Behälters erstreckt, umfassend mindestens die folgenden Schritte: Empfangen mindestens eines ortsaufgelösten Bilddatensatzes eines mit mindestens einem Verschluss verschlossenen Behälters; Analysieren des ortsaufgelösten Bilddatensatzes mit einem ersten maschinell trainierten Algorithmus, ob der Verschluss mindestens ein Element aufweist, das zumindest eine Rotationssymmetrie des Verschlusses um die Längsachse bricht; wenn das mindestens eine Element vorhanden ist: Inspizieren zumindest des mindestens einen Elements mittels eines zweiten maschinell trainierten Algorithmus, ob mindestens ein Beschädigungsmerkmal vorhanden ist; wenn mindestens ein Beschädigungsmerkmal vorhanden ist: Bereitstellen eines Auswurfsignals für den Behälter; Wenn kein Element vorhanden ist, das zumindest eine Rotationssymmetrie des Verschlusses um die Längsachse bricht: Inspizieren des Verschlusses mit einem ersten nicht maschinell trainierten Algorithmus, ob der Verschluss korrekt auf dem Behälter angeordnet ist und/oder mindestens ein Beschädigungsmerkmal aufweist, das insbesondere unter Umständen Rückschlüsse auf die Dichtigkeit zulässt; wenn der Verschluss nicht korrekt auf dem Behälter angeordnet ist und/oder wenn der der Verschluss mindestens ein Beschädigungsmerkmal aufweist: Bereitstellen eines Auswurfsignals für den Behälter.

Es wird damit ein computerimplementiertes Verfahren bereitgestellt, bei dem lediglich bei Vorhandensein von Elementen, die die Rotationssymmetrie des Verschlusses brechen, der zweite maschinell trainierter Algorithmus für die Inspektion der Bilddatensätze des Behälters mit dem Verschluss verwendet wird. Andernfalls wird der erste nicht maschinell trainierte Algorithmus, der im Folgenden als klassischer Algorithmus bezeichnet werden kann, für die Inspektion bzw. die Analyse der Bilddatensätze verwendet. Zur Ermittlung, ob ein oder mehrere Elemente des Verschlusses dessen Rotationssymmetrie brechen, wird ein erster maschinell trainierter Algorithmus verwendet. Die Rotationssymmetrie ist als Rotationssymmetrie um die Längsachse zu verstehen, die sich sowohl durch den Verschluss als auch zumindest durch die von dem Verschluss verschlossene Mündung des Behälters erstreckt. Bei Drehverschlüssen kann die Längsachse auch die Drehachse des Verschlusses sein.

Durch die Verwendung des ersten maschinell trainierten Algorithmus kann die Ermittlung, ob die Rotationssymmetrie gebrochen wird, mit hoher Genauigkeit effizient durchgeführt werden. Wenn der Verschluss rotationssymmetrisch ist, wird der mindestens eine Bilddatensatz des Verschlusses, durch einen ersten nicht maschinell trainierten Algorithmus untersucht. Wenn Elemente vorhanden sind, die die Rotationssymmetrie des Verschlusses brechen, werden zumindest diese Elemente mittels des zweiten maschinell trainierten Algorithmus untersucht oder können wahlweise ignoriert werden. Ergibt die Prüfung mit dem ersten nicht maschinell trainierten Algorithmus, dass der Verschluss nicht korrekt auf dem Behälter angeordnet ist und/oder mindestens ein Beschädigungsmerkmal aufweist, das einen Hinweis auf Undichtigkeit geben kann, wird ein Auswurfsignal für den Behälter bereitgestellt. Ein nicht korrekt angeordneter Verschluss kann zum Beispiel durch einen untergeklappten Sicherungsring gegeben sein. Das Auswurfsignal kann dabei dem Behälter zugeordnet sein, dessen mindestens einer Bilddatensatz untersucht wurde. Wenn die Prüfung mit dem zweiten maschinell trainierten Algorithmus ergibt, dass zumindest an den ermittelten Elementen Beschädigungsmerkmale vorhanden sind, wird ebenfalls ein Auswurfsignal für den untersuchten Behälter bereitgestellt. Ein Beschädigungsmerkmal kann beispielsweise ein Riss, einer nicht vorgesehene Ausnehmung oder ein verdünnter Bereich an dem Element sein. Das Element kann beispielsweise ein Scharnier, einer Lasche oder ein Band sein. Mit dem computerimplementierten Verfahren werden damit zielgerichtet zumindest die Elemente, die den Bruch der Rotationssymmetrie des Verschlusses verantworten, mit dem zweiten maschinell trainierten Algorithmus untersucht. Verschlüsse, die rotationssymmetrisch sind, können mit dem ersten nicht maschinell trainierten Algorithmus, der einen klassischen Algorithmus darstellt, untersucht werden. Die Untersuchung mit einem klassischen Algorithmus ist in vielen Fällen intuitiver zu optimieren als es mit einem maschinell trainierten Algorithmus der Fall wäre. Auf diese Weise kann die Bildverarbeitung mit einem solchen klassischen Algorithmus gezielt und effizient vom Bediener optimiert werden. Durch die Kombination beider Algorithmen wird nicht nur die Effizienz der Inspektion der Behälter erhöht und zielgerichtet ausgestaltet, sondern erfolgt auch generalisiert und ganzheitlich.

Gemäß einem Ausführungsbeispiel ist denkbar, dass der Schritt Analysieren des ortsaufgelösten Bilddatensatzes mindestens folgenden Schritt aufweisen kann: Segmentieren des mindestens einen Bilddatensatzes in mindestens einen ersten Bereich, der das mindestens eine Element aufweist und mindestens einen zweiten Bereich, der frei von dem mindestens einen Element ist.

Damit kann der Bilddatensatz in Bereiche unterteilt werden, die symmetriebrechende Elemente aufweisen bzw. nicht aufweisen. Damit kann eine zielgerichtete Auswertung vorbereitet und durchgeführt werden.

Gemäß einem weiteren Ausführungsbeispiel ist denkbar, dass der mindestens eine erste Bereich mittels eines zweiten maschinell trainierten Algorithmus inspiziert werden kann.

Durch die Segmentierung können diejenigen Bereiche mit dem zweiten maschinell trainierten Algorithmus untersucht werden, die mindestens ein Element aufweisen, das die Rotationssymmetrie bricht, d h. die ersten Bereiche. Alle anderen Bereiche, d. h. die zweiten Bereiche, können von dem zweiten maschinell trainierten Algorithmus ignoriert werden. Auf diese Weise kann Rechenkapazität gespart werden, die Inspektion noch zielgerichteter durchgeführt und die Stärken von klassischen und maschinell trainierten Algorithmen kombiniert werden.

Weiter ist zum Beispiel denkbar, dass der mindestens eine zweite Bereich mittels eines zweiten nicht maschinell trainierten Algorithmus darauf inspiziert werden kann, ob mindestens ein Beschädigungsmerkmal vorhanden ist.

Damit können lediglich diejenigen Bereiche, die kein Element aufweisen, das die Rotationssymmetrie des Verschlusses bricht, mit dem zweiten nicht maschinell trainierten Algorithmus, der wie der erste nicht maschinell trainierte Algorithmus einen klassischen Algorithmus darstellen kann, mit vergleichsweise geringem Rechenaufwand untersucht werden.

Es können in einigen Ausführungsbeispielen alle ersten Bereiche und alle zweiten Bereiche inspiziert werden.

Damit kann ein großer Bereich oder auch der gesamte Verschluss untersucht werden, sodass die Qualität der Inspektion erhöht werden kann. Die Wahrscheinlichkeit, dass Beschädigungen und oder Qualitätsmängel übersehen werden, wird damit verringert.

Weiter kann der Schritt Analysieren des ortsaufgelösten Bilddatensatzes beispielsweise mindestens die folgenden Unterschritte aufweisen: Prüfen, ob der Verschluss als ein Tethered Cap oder Sports Cap ausgebildet ist; wenn der Verschluss nicht als Tethered Cap oder Sports Cap ausgebildet ist: Durchführen des Schritts Inspizieren des Verschlusses mit einem ersten nicht maschinell trainierten Algorithmus; wenn der Verschluss als Tethered Cap oder Sports Cap ausgebildet ist: Prüfen, ob der Verschluss mindestens ein Element aufweist, das zumindest eine Rotationssymmetrie des Verschlusses um die Längsachse bricht.

Als Tethered Cap oder Sports Cap ist ein Verschluss zu verstehen, der nach dem Öffnen weiterhin an dem Behälter befestigt ist. Im Gegensatz dazu ist ein loser Verschluss nach dem Öffnen von dem Behälter getrennt. Sofern kein Tethered Cap oder Sports Cap vorliegt, wird eine Inspektion mittels eines ersten nicht maschinell trainierten Algorithmus durchgeführt. Damit werden alle Verschlüsse, die keine Tethered Caps oder Sports Cap sind, mit einem klassischen Algorithmus inspiziert. Tethered Caps, die rotationssymmetrisch sind, werden ebenfalls mit dem ersten nicht maschinell trainierten Algorithmus inspiziert. In beiden Fällen kann die Inspektion mit einem klassischen Algorithmus ausgeführt werden. Damit kann die Inspektion weiter zielgerichtet und effizient durchgeführt werden.

Gemäß einigen Ausführungsbeispielen ist denkbar, dass das Verfahren sequenziell für eine Vielzahl von empfangenen Bilddatensätzen verschiedener Behälter durchgeführt werden kann.

Das Verfahren wird damit nacheinander immer wieder für jeweils einen anderen Behälter durchgeführt. Die Behälter können damit beispielsweise in einer Reihe nacheinander an einer Inspektionsvorrichtung vorbei transportiert werden, wobei die Inspektionsvorrichtung jeden Behälter inspiziert und einen Bilddatensatz für ihn bereitstellt. Die Bilddatensätze können dann nacheinander durch das Verfahren bearbeitet werden.

In einem zweiten Aspekt wird ein Verfahren zum Inspizieren mindestens eines Behälters vorgeschlagen, umfassend mindestens die folgenden Schritte: Transportieren des mindestens einen mit einem Verschluss verschlossenen Behälter zu einer Inspektionsvorrichtung; Ermitteln mindestens eines Bilddatensatzes des Behälters mittels der Inspektionsvorrichtung; Übermitteln des mindestens einen Bilddatensatzes an eine Rechnervorrichtung, die das computerimplementierte Verfahren nach der vorangegangenen Beschreibung durchführt.

Der mindestens eine Behälter kann damit beispielsweise nach dem Verschließen von einer Verschließvorrichtung zu einer Inspektionsvorrichtung transportiert werden. Der Bilddatensatz kann dann einer Rechnervorrichtung übermittelt werden, die das computerimplementierte Verfahren gemäß den oben angeführten Erläuterungen durchführen kann.

Gemäß einem Ausführungsbeispiel ist denkbar, dass das Verfahren weiter mindestens den folgenden Schritt aufweisen kann: Empfangen des Auswurfsignals mittels einer Auswurfvorrichtung; Auswerfen des betreffenden Behälters aus der Transportvorrichtung mittels der Auswurfvorrichtung.

Wenn der Bilddatensatz eines Behälters dahingehend analysiert wurde, dass entweder eine Beschädigung oder ein Qualitätsmangel bzw. ein inkorrekter Sitz des Verschlusses festgestellt wurde, kann der entsprechende Behälter mit der Auswurfvorrichtung ausgeworfen werden. Die Auswurfvorrichtung kann dabei das Auswurfsignal empfangen, das von dem computerimplementierten Verfahren, beispielsweise über eine Rechnereinheit, bereitgestellt werden kann.

Gemäß einem weiteren Ausführungsbeispiel ist denkbar, dass eine Vielzahl von mit jeweils einem Verschluss verschlossenen Behälter von der Transportvorrichtung nacheinander zu der Inspektionsvorrichtung transportiert werden können.

Weitere Vorteile und Wirkungen sowie Weiterbildungen des Verfahrens ergeben sich aus den Vorteilen und Wirkungen sowie Weiterbildungen des oben erläuterten computerimplementierten Verfahrens. Zur Vermeidung von Wiederholungen wird daher in dieser Hinsicht auf die vorangegangene Beschreibung verwiesen.

In einem dritten Aspekt betrifft die Erfindung ein System zum Inspizieren mindestens eines mit einem Verschluss verschlossenen Behälters, umfassend mindesten eine Transportvorrichtung zum Transportieren mindestens eines Behälters entlang einer Transportrichtung, mindestens eine Inspektionsvorrichtung zum Inspizieren des Behälters, mindestens eine Auswurfvorrichtung zum Auswerfen des Behälters und mindestens einen Rechnervorrichtung, wobei die Inspektionsvorrichtung an der Transportvorrichtung angeordnet ist und die Auswurfvorrichtung in Transportrichtung hinter der Inspektionsvorrichtung an der Transportvorrichtung angeordnet ist, wobei die Rechnervorrichtung über mindestens eine Signalverbindung mit der Inspektionsvorrichtung und der Auswurfvorrichtung signaltechnisch verbunden ist, und wobei das System zum Durchführen des Verfahrens gemäß der vorangegangenen Beschreibung ausgebildet ist und/oder wobei die Rechnervorrichtung zum Durchführen des computerimplementierten Verfahrens gemäß der vorangegangenen Beschreibung ausgebildet ist.

Vorteile und Wirkungen sowie Weiterbildungen des Systems ergeben sich aus den Vorteilen und Wirkungen sowie Weiterbildungen der oben erläuterten Verfahren. Zur Vermeidung von Wiederholungen wird daher in dieser Hinsicht auf die vorangegangene Beschreibung verwiesen.

In einem vierten Aspekt betrifft die Erfindung eine Anlage zum Herstellen und/oder Behandeln mindestens eines Behälters, umfassend mindestens eine Verschließmaschine zum Verschließen mindestens eines Behälters mit einem Verschluss, einem Transportsystem und ein System zum Inspizieren mindestens eines mit einem Verschluss verschlossenen Behälters nach der vorangegangenen Beschreibung, wobei das Transportsystem die Verschließmaschine mit dem System verbindet und zum Transportieren von mit einem Verschluss verschlossenen Behältern ausgebildet ist.

Vorteile und Wirkungen sowie Weiterbildungen der Anlage ergeben sich aus den Vorteilen und Wirkungen sowie Weiterbildungen der oben erläuterten Verfahren und/oder des oben beschriebenen Systems. Zur Vermeidung von Wiederholungen wird daher in dieser Hinsicht auf die vorangegangene Beschreibung verwiesen.

In einem fünften Aspekt betrifft die Erfindung ein Computerprogrammprodukt umfassend auf einem Computer ausführbare Instruktionen, die bei Ausführung durch den Computer, den Computer dazu veranlassen, das computerimplementierte Verfahren nach der vorangegangenen Beschreibung durchzuführen.

Vorteile und Wirkungen sowie Weiterbildungen des Computerprogrammprodukts ergeben sich aus den Vorteilen und Wirkungen sowie Weiterbildungen des oben beschriebenen computerimplementierten Verfahrens. Es wird daher in dieser Hinsicht auf die vorangegangene Beschreibung verwiesen. Unter einem Computerprogrammprodukt kann z. B. ein Datenträger verstanden werden, auf dem ein Computerprogrammelement gespeichert ist, das für einen Computer ausführbare Instruktionen aufweist. Alternativ oder zusätzlich kann unter einem Computerprogrammprodukt beispielsweise auch ein dauerhafter oder flüchtiger Datenspeicher, wie Flash-Speicher oder Arbeitsspeicher, verstanden werden, der das Computerprogrammelement aufweist. Weitere Arten von Datenspeichern, die das Computerprogrammelement aufweisen, seien damit jedoch nicht ausgeschlossen.

Im Folgenden wird die Erfindung anhand einer beispielhaften Ausführungsform mittels der beigefügten Zeichnung beschrieben. Es zeigen:
- Figur 1: ein Flussdiagramm des Verfahrens zum Inspizieren mindestens eines Behälters;
- Figur 2: eine schematische Darstellung der Anlage zum Herstellen und/oder Behandeln von Behältern; und
- Figur 3: eine schematische Darstellung eines mit einem Verschluss verschlossenen Behälters.

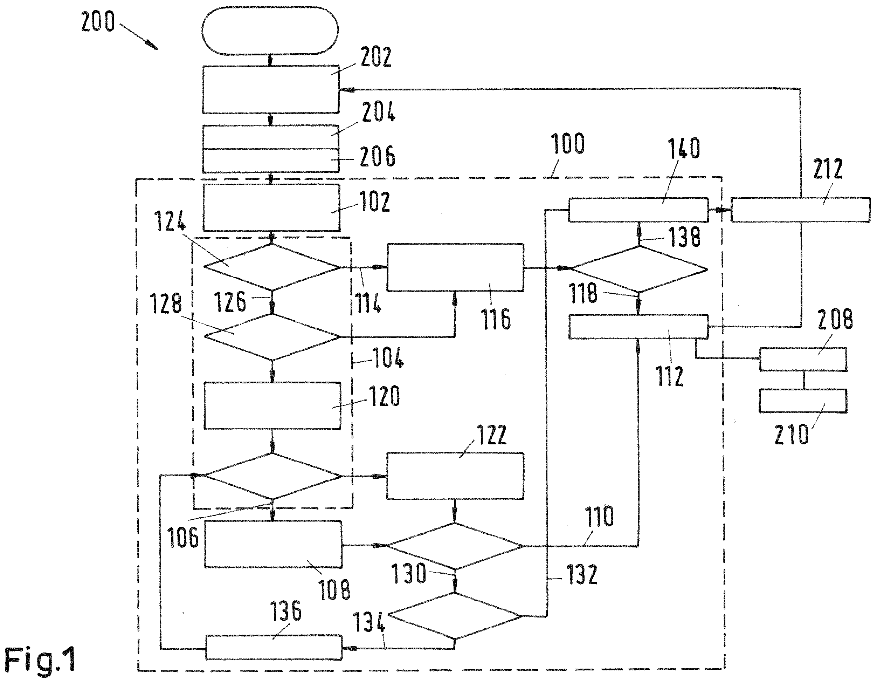

Das computerimplementierte Verfahren 100 zum Inspizieren mindestens eines Verschlusses eines Behälters wird in Figur 1 als Teil des Verfahrens 200 zum Inspizieren eines Behälters dargestellt. Dies soll jedoch nicht ausschließen, dass das computerimplementierte Verfahren 100 für sich allein auf einem Computer ausgeführt werden kann.

Das computerimplementierte Verfahren 100 weist in einem ersten Schritt 102 das Empfangen mindestens eines ortsaufgelösten Bilddatensatzes eines mit mindestens einem Verschluss verschlossenen Behälters auf. Der ortsaufgelöste Bilddatensatz kann beispielsweise von mindestens einer Inspektionseinrichtung ermittelt, die eine optische Messeinrichtung, beispielsweise eine Kamera, sein kann. Vorzugweise können vier Inspektionseinrichtungen verwendet werden, um eine 360° Ansicht der transportierten Behälter zu erhalten. Der Bilddatensatz kann eine digitale Darstellung des verschlossenen Behälters mit dem Verschluss aufweisen. Dabei kann der Bilddatensatz eine Vielzahl von zweidimensionalen Bildern aufweisen, die den Behälter aus verschiedenen Richtungen darstellen. Alternativ oder zusätzlich kann der Bilddatensatz eine dreidimensionale Darstellung des verschlossenen Behälters aufweisen.

Der Bilddatensatz kann über eine Signalleitung als Bildsignal bereitgestellt werden. Die Signalleitung kann damit eine Datenleitung sein, mit der die Bilddatensätze zwischen verschiedenen Vorrichtungen ausgetauscht werden können.

In einem weiteren Schritt 104 wird der ortsaufgelöste Bilddatensatz analysiert. Die Analyse erfolgt mit einem ersten maschinell trainierten Algorithmus, der ermittelt, ob der Verschluss des Behälters mindestens ein Element aufweist, das zumindest eine Rotationssymmetrie des Verschlusses bricht. Die Rotationssymmetrie wird dabei auf die Längsachse bezogen, die sich durch den Verschluss und die Mündung des Behälters erstreckt. Weiter kann sich die Längsachse zum Beispiel zum Boden des Behälters oder zu einer Seitenwand des Behälters erstecken. Die Längsachse kann gleichzeitig eine Drehachse des Verschlusses sein, wobei der Behälter durch das Drehen des Verschlusses geöffnet oder geschlossen werden kann.

Ergibt die Prüfung, dass mindestens ein Element an dem Verschluss vorhanden ist, dass die Rotationssymmetrie des Verschlusses um die Längsachse bricht, folgt das Verfahren 100 dem Pfad 106 und führt den Schritt 108 aus.

Gemäß Schritt 108 wird zumindest das mindestens eine Element inspiziert. Dabei wird geprüft, ob mindestens ein Beschädigungsmerkmal an dem Element vorhanden ist. Der Schritt 108 wird mittels eines zweiten maschinell trainierten Algorithmus durchgeführt.

Der erste und zweite maschinell trainierte Algorithmus können identisch sein, sodass die Schritte 104 und 108 von demselben maschinell trainierten Algorithmus durchgeführt werden können. Alternativ sind der erste und zweite maschinell trainierte Algorithmus unterschiedlich, sodass sie auf die unterschiedlichen Aufgaben speziell trainiert werden können.

Maschinell trainierte Algorithmen können beispielsweise neuronale Netze sein, die mit Trainingsdaten trainiert worden. Alternativ kann ein Entscheidungsbaum verwendet werden, der ebenfalls mit Trainingsdaten trainiert werden kann. Auch andere Algorithmen, die mit Trainingsdaten vorab oder nachträglich, ggf. mehrfach, trainiert werden können, um eine bestimmte Aufgabe zu lösen, können als erster maschinell trainierter Algorithmus und/oder als zweiter maschinell trainierter Algorithmus verwendet werden.

Ist ein Beschädigungsmerkmal vorhanden, folgt das computerimplementierte Verfahren 100 im Flussdiagramm dem Pfad 110 und führt den Schritt 112 durch. Im Schritt 112 wird ein Auswurfsignal für den Behälter bereitgestellt. Empfängt beispielsweise eine Auswurfvorrichtung das Auswurfsignal, wird die Auswurfvorrichtung dazu veranlasst, den entsprechenden Behälter auszuwerfen.

Wenn im Schritt 104 ermittelt wird, dass kein Element vorhanden ist, das die Rotationssymmetrie bricht, folgt das Verfahren 100 dem Pfad 114 und führt den Schritt 116 durch. Im Schritt 116 wird der Verschluss mit einem ersten nicht maschinell trainierten Algorithmus inspiziert. Dabei wird geprüft, ob der Verschluss korrekt auf dem Behälter angeordnet ist und/oder ob der Verschluss den Behälter abdichtet. Wenn der Verschluss den Behälter nicht abdichtet oder nicht korrekt auf dem Behälter angeordnet ist, wird der Schritt 112 durchgeführt.

Im Schritt 104 kann weiter ein Unterschritt 120 vorgesehen sein. Im Unterschritt 120 kann der Bilddatensatz segmentiert werden, wobei die Segmentation den Bilddatensatz in erste Bereiche mit mindestens einem Element, das die Rotationssymmetrie des Verschlusses bricht, und in zweite Bereiche, die kein derartiges Element aufweisen, unterteilen kann. Der Unterschritt 120 kann beispielsweise durchgeführt werden, wenn feststeht, dass der Verschluss mindestens ein Element aufweist, das die Rotationssymmetrie des Verschlusses bricht.

Mit dem Unterschritt 120 kann die Inspektion im Schritt 108 vereinfacht werden, da mit dem Ermitteln des mindestens eines ersten Bereichs eine Region of Interest für die Inspektion des Elements am Verschluss bereitgestellt wird. Dabei kann für jedes Element ein eigener erster Bereich ermittelt werden. Jeder dieser ersten Bereiche kann dann im Schritt 108 durch den zweiten maschinell trainierten Algorithmus untersucht werden.

Die zweiten Bereiche, die kein Element aufweisen, das die Rotationssymmetrie des Verschlusses bricht, können gemäß Schritt 122 mit einem zweiten klassischen Algorithmus, d. h. einem zweiten nicht maschinell trainierten Algorithmus inspiziert werden. Dabei kann ebenfalls ermittelt werden, ob mindestens ein Beschädigungsmerkmal in dem untersuchten zweiten Bereich vorhanden ist.

Ebenso wie im Schritt 108 kann der Schritt 112 durchgeführt werden, wenn ein Beschädigungsmerkmal in dem untersuchten zweiten Bereich vorhanden ist.

Wenn nach dem Schritt 108 oder nach dem Schritt 112 feststeht, dass kein Beschädigungsmerkmal in dem untersuchten ersten oder zweiten Bereich vorhanden ist, kann das Verfahren 100 dem Pfad 134 folgen und gemäß Schritt 136 einen weiteren noch nicht untersuchten Bereich bereitstellen, der analysiert werden soll. Je nachdem ob der entsprechende Bereich ein erster Bereich oder ein zweiter Bereich ist, wird mit dem Schritt 108 oder dem Schritt 112 fortgefahren.

Der Schritt 108 kann weiter den Unterschritt 124 aufweisen, der vor dem Schritt 120 durchgeführt werden kann. Im Schritt 124 kann geprüft werden, ob der Verschluss ein Tethered Cap oder Sports Cap ist. Ist der Verschluss ein loser Verschluss, wird mit dem Schritt 116 fortgefahren.

Wenn festgestellt wird, dass der Verschluss kein loser Verschluss ist, kann mit einem weiteren Unterschritt 128 fortgefahren werden, in dem die Rotationssymmetrie des Verschlusses geprüft wird. Liegt diese vor, wird mit dem Schritt 116 fortgefahren. Falls nicht, kann beispielsweise mit dem Unterschritt 120 oder unmittelbar mit dem Schritt 108 fortgefahren werden.

Sofern in den Schritten 108 und/oder 122 festgestellt wird, dass keiner der Bereiche Beschädigungsmerkmale aufweist und alle zu untersuchenden Bereiche kontrolliert wurden, kann dem Pfad 132 gefolgt werden und gemäß Schritt 140 ein Weitertransportsignal ausgegeben werden. Das Weitertransportsignal kann derart ausgebildet sein, dass es bei Empfang durch eine Transportvorrichtung den Weitertransport des Behälters freigibt bzw. bei Empfang durch eine Auswurfvorrichtung den Auswurf des Behälters durch eine Auswurfvorrichtung verhindert.

Der Schritt 140 kann ebenfalls durchgeführt werden, wenn im Schritt 116 festgestellt wird, dass der Behälter dicht ist und der Verschluss korrekt sitzt.

Das computerimplementierte Verfahren 100 kann im Rahmen eines Verfahrens 200 zum Inspizieren mindestens eines Behälters durchgeführt werden.

Dabei weist das Verfahren 200 zumindest einen Schritt 202 auf, mit dem ein Behälter, der mit einem Verschluss verschlossen ist, zu einer Inspektionsvorrichtung transportiert wird.

Der Transport kann mit einer Transportvorrichtung durchgeführt werden.

Die Inspektionsvorrichtung kann in einem Schritt 204 mindestens einen Bilddatensatz des Behälters ermitteln. Wenn die Inspektionsvorrichtung beispielsweise eine Kamera ist, die stationär aufgestellt ist, kann der Behälter um die Längsachse gedreht werden. Die Inspektionsvorrichtung kann dann unter verschiedenen Winkelstellungen jeweils einen Bilddatensatz von dem Behälter aufnehmen, um verschiedene Ansichten des Behälters zu erhalten.

Der ermittelte Bilddatensatz kann im Schritt 206 an eine Rechnervorrichtung übermittelt werden, die das computerimplementierte Verfahren 100 durchführen kann.

Das Auswurfsignal oder das Weitertransportsignal können von der Rechnervorrichtung zum Beispiel an eine Auswurfvorrichtung übermittelt werden. Dabei kann in einem Schritt 108 des Verfahrens 200 das Auswurfsignal von der Auswurfvorrichtung empfangen werden. Wenn die Ausfuhrvorrichtung das Signal empfängt, kann sie in einem Schritt 210 den betreffenden Behälter aus der Transportvorrichtung auswerfen.

Gemäß dem Verfahren 200 kann der Inspektionsvorrichtung mit dem Schritt 212 eine Vielzahl von Behältern nacheinander zugeführt werden, sodass die Inspektionsvorrichtung eine Vielzahl von Bilddatensätzen verschiedener Behälter an die Rechnervorrichtung übermitteln kann.

Die Bilddatensätze können von dem computerimplementierten Verfahren 100 nacheinander analysiert werden. Alternativ oder zusätzlich kann die Rechnervorrichtung das computerimplementierte Verfahren 100 beispielsweise auf verschiedenen Rechnerkernen mehrfach parallel durchführen, sodass mehrere Bilddatensätze zeitlich parallel untersucht werden können.

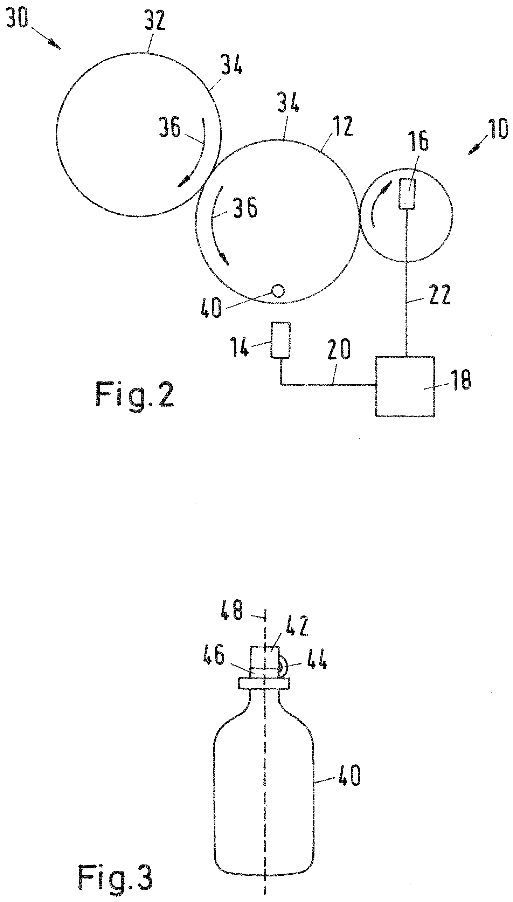

In Figur 2 ist eine Anlage 30 zum Herstellen und/oder Behandeln mindestens eines Behälters dargestellt. Die Anlage 30 weist ein System 10 auf, das zum Inspizieren mindestens eines mit ein Verschluss verschlossenen Behälters ausgebildet ist.

Das System 10 weist mindestens eine Transportvorrichtung 12 auf, mit der Behälter entlang einer Transportrichtung 36 transportiert werden können. Weiter weist das System 10 eine Inspektionsvorrichtung 14 auf, mit der Behälter inspiziert werden können. Die Inspektionsvorrichtung 14 kann mindestens einen Bilddatensatz von jedem inspizierten Behälter bereitstellen. Das System weist weiter eine Auswurfvorrichtung 16 auf, die in Transportrichtung 36 hinter der Inspektionsvorrichtung 14 angeordnet sein kann.

Eine Rechnervorrichtung 18 des Systems 10 kann über Signalverbindungen 20, 22 mit der Inspektionsvorrichtung 14 und der Ausfuhrvorrichtung 16 verbunden sein. Die Signalverbindungen 20, 22 können kabellos oder kabelgebunden ausgebildet sein. Über die Signalverbindung 20 kann beispielsweise ein Bilddatensatz von Inspektionsvorrichtung 14 an die Rechnervorrichtung 18 übermittelt werden. Über die Signalverbindung 22 kann ein Auswurfsignal und/oder ein Weitertransportsignal von der Rechnervorrichtung 18 zu der Auswurfvorrichtung 16 übermittelt werden.

Die Rechnervorrichtung 18 ist dazu ausgebildet, das computerimplementierte Verfahren 100 auszuführen. Dazu kann die Rechnervorrichtung 18 ein Computerprogrammprodukt aufweisen, das auf einem Computer ausführbare Instruktion aufweist. Wenn die Instruktionen auf dem Computer ausgeführt werden, veranlassen sie den Computer dazu, das computerimplementierte Verfahren 100 auszuführen.

Eingabedaten des computerimplementierten Verfahrens 100 können die von der Inspektionsvorrichtung 14 übermittelten Bilddatensätze sein. Ausgabedaten können das Auswurfsignal und/oder das Weitertransportsignal sein.

Die Anlage 30 kann weiter eine Verschließmaschine 32 aufweisen, die Behälter mit Verschlüssen ausstattet. Weiter kann die Anlage 30 ein Transportsystem 34 aufweisen, wobei das Transportsystem 34 zum Transportieren von verschlossenen Behältern 40 ausgebildet ist und Behälter von der Verschließmaschine 32 zu dem System 10 transportieren kann. Die Transportvorrichtung 12 kann Teil des Transportsystems 34 sein.

Das Transportsystem 34 kann einen Transport der Behälter mittels Transporträdern durchführen, die um eine vertikale Achse drehbar gelagert sind. Die Behälter werden dann an dem Umfang der Transporträder gehalten und auf Kreisbögen bewegt. Alternativ oder zusätzlich kann den Transport der Behälter in linearer Richtung erfolgen, beispielsweise mit einem Förderband (nicht dargestellt). Die Inspektionsvorrichtung 14 kann dann beispielsweise an dem Bands angeordnet sein.

In Figur 3 ist ein Behälter 40 schematisch dargestellt. Der Behälter 40 erstreckt sich entlang der Längsachse 48. An einem Mündungsbereich weist der Behälter 40 einen Verschluss 42 auf. Der Verschluss kann über ein Halteband oder ein Scharnier 44 mit einem Sicherungsring 46 verbunden sein. Der Sicherungsring 46 kann unlösbar an dem Behälter 40 befestigt sein. Über das Scharnier 44 bzw. das Halteband ist damit auch der Verschluss 42 unlösbar mit dem Behälter 40 befestigt. Unlösbar meint hierbei, dass ein Lösen des Verschlusses 42 ohne eine Zerstörung des Scharniers 44, des Verschlusses 42 und/oder des Sicherungsrings 46 nicht möglich sein soll.

Der Verschluss 42 erstreckt sich ebenfalls entlang der Längsachse 48 und kann rotationssymmetrisch zu der Längsachse 48 sein. Das Scharnier 44 bzw. das Halteband kann die Rotationssymmetrie brechen.

Bei Durchführung des oben genannten Schritts 120 des computerimplementierten Verfahrens 100 kann der Bereich um das Scharnier 44 bzw. das Halteband ein erster Bereich sein. Alle Bereiche außerhalb des ersten Bereichs können zweite Bereiche sein.

Das oben beschriebene Beispiel dient in keiner Weise einer Beschränkung der Erfindung. Vielmehr kann die Erfindung in vielfältiger Weise abgewandelt werden. Alle oben beschriebenen Merkmale der Erfindung können allein oder in Kombination miteinander wesentlich für die Erfindung sein.

### Bezugszeichenliste

- 10: System
- 12: Transportvorrichtung
- 14: Inspektionsvorrichtung
- 16: Auswurfvorrichtung
- 18: Rechnervorrichtung
- 20: Signalverbindung
- 22: Signalverbindung
- 30: Anlage
- 32: Verschließmaschine
- 34: Transportsystem
- 36: Transportrichtung
- 40: Behälter
- 42: Verschluss
- 44: Scharnier
- 46: Sicherungsring
- 48: Längsachse

## Patentansprüche

1. Computerimplementiertes Verfahren (100) zum Inspizieren mindestens eines Verschlusses (42) eines Behälters (40), wobei sich der Verschluss (42) am Behälter (40) entlang einer Längsachse (48) erstreckt, die sich durch eine Mündung des Behälters (40) erstreckt, umfassend mindestens die folgenden Schritte:
- Empfangen (102) mindestens eines ortsaufgelösten Bilddatensatzes eines mit mindestens einem Verschluss (42) verschlossenen Behälters (40);
- Analysieren (104) des ortsaufgelösten Bilddatensatzes mit einem ersten maschinell trainierten Algorithmus, ob der Verschluss (42) mindestens ein Element (44) aufweist, das zumindest eine Rotationssymmetrie des Verschlusses (42) um die Längsachse (48) bricht;
- Wenn das mindestens eine Element (44) vorhanden (106) ist:
- Inspizieren (108) zumindest des mindestens einen Elements (44) mittels eines zweiten maschinell trainierten Algorithmus, ob mindestens ein Beschädigungsmerkmal vorhanden ist;
- Wenn mindestens ein Beschädigungsmerkmal vorhanden (110) ist:
- Bereitstellen (112) eines Auswurfsignals für den Behälter (40);
- Wenn kein Element (44) vorhanden (114) ist, das zumindest eine Rotationssymmetrie des Verschlusses (42) um die Längsachse (48) bricht:
- Inspizieren (116) des Verschlusses (42) mit einem ersten nicht maschinell trainierten Algorithmus, ob der Verschluss (42) korrekt auf dem Behälter (40) angeordnet ist und/oder mindestens ein Beschädigungsmerkmal aufweist;
- Wenn der Verschluss (42) nicht korrekt auf dem Behälter (40) angeordnet ist und/oder wenn der Verschluss (42) mindestens ein Beschädigungsmerkmal aufweist (118):
- Bereitstellen (112) eines Auswurfsignals für den Behälter (40).

2. Computerimplementiertes Verfahren (100) nach Anspruch 1, **dadurch gekennzeichnet, dass** der Schritt Analysieren (104) des ortsaufgelösten Bilddatensatzes weiter mindestens folgenden Unterschritt aufweist:
- Segmentieren (120) des mindestens einen Bilddatensatzes in mindestens einen ersten Bereich, der das mindestens eine Element (44) aufweist und mindestens einen zweiten Bereich, der frei von dem mindestens einen Element (44) ist.

3. Computerimplementiertes Verfahren (100) nach Anspruch 2, **dadurch gekennzeichnet, dass** der mindestens eine erste Bereich mittels des zweiten maschinell trainierten Algorithmus inspiziert wird.

4. Computerimplementiertes Verfahren (100) nach Anspruch 2 oder 3, **dadurch gekennzeichnet, dass** der mindestens eine zweite Bereich mittels eines zweiten nicht maschinell trainierten Algorithmus darauf inspiziert (122) wird, ob mindestens ein Beschädigungsmerkmal vorhanden ist.

5. Computerimplementiertes Verfahren (100) nach einem der Ansprüche 2 bis 4, **dadurch gekennzeichnet, dass** alle ersten Bereiche und alle zweiten Bereiche inspiziert werden.

6. Computerimplementiertes Verfahren (100) nach einem der vorangegangenen Ansprüche, **dadurch gekennzeichnet, dass** der Schritt (104) Analysieren des ortsaufgelösten Bilddatensatzes mindestens die folgenden Unterschritte aufweist:
- Prüfen (124), ob der Verschluss (42) als ein Tethered Cap oder Sports Cap ausgebildet ist;
- Wenn der Verschluss (42) nicht als Tethered Cap ausgebildet ist:
- Durchführen des Schritts Inspizieren (116) des Verschlusses (42) mit einem ersten nicht maschinell trainierten Algorithmus;
- Wenn der Verschluss (42) als Tethered Cap ausgebildet ist (126):
- Prüfen (128), ob der Verschluss (42) mindestens ein Element (44) aufweist, das zumindest eine Rotationssymmetrie des Verschlusses (42) um die Längsachse (48) bricht.

7. Computerimplementiertes Verfahren (100) nach einem der vorangegangenen Ansprüche, **dadurch gekennzeichnet, dass** das Verfahren sequentiell für eine Vielzahl von empfangenen Bilddatensätzen verschiedener Behälter (40) durchgeführt wird.

8. Verfahren (200) zum Inspizieren mindestens eines Behälters (40), umfassend mindestens die folgenden Schritte:
- Transportieren (202) des mindestens einen mit einem Verschluss (42) verschlossenen Behälter (40) zu einer Inspektionsvorrichtung (14);
- Ermitteln (204) mindestens eines Bilddatensatzes des Behälters (40) mittels der Inspektionsvorrichtung (14);
- Übermitteln (206) des mindestens einen Bilddatensatzes an eine Rechnervorrichtung (18), die das computerimplementierte Verfahren nach einem der Ansprüche 1 bis 7 durchführt.

9. Verfahren (200) nach Anspruch 8, **dadurch gekennzeichnet, dass** das Verfahren weiter mindestens den folgenden Schritt aufweist:
- Empfangen (208) des Auswurfsignals mittels einer Auswurfvorrichtung (16);
- Auswerfen (210) des betreffenden Behälters (40) aus der Transportvorrichtung (12) mittels der Auswurfvorrichtung (16).

10. Verfahren (200) nach Anspruch 8 oder 9, **dadurch gekennzeichnet, dass** eine Vielzahl von mit jeweils einem Verschluss (42) verschlossenen Behälter (40) von der Transportvorrichtung (12) nacheinander zu der Inspektionsvorrichtung (14) transportiert werden.

11. System (10) zum Inspizieren mindestens eines mit einem Verschluss (42) verschlossenen Behälters (40), umfassend mindesten eine Transportvorrichtung (12) zum Transportieren mindestens eines Behälters (40) entlang einer Transportrichtung (36), mindestens eine Inspektionsvorrichtung (14) zum Inspizieren des Behälters (40), mindestens eine Auswurfvorrichtung (16) zum Auswerfen des Behälters (40) und mindestens einen Rechnervorrichtung (18), wobei die Inspektionsvorrichtung (14) an der Transportvorrichtung (12) angeordnet ist und die Auswurfvorrichtung (16) in Transportrichtung (36) hinter der Inspektionsvorrichtung (14) an der Transportvorrichtung (12) angeordnet ist, wobei die Rechnervorrichtung (18) über mindestens eine Signalverbindung (20, 22) mit der Inspektionsvorrichtung (14) und der Auswurfvorrichtung (16) signaltechnisch verbunden ist, und wobei das System (10) zum Durchführen des Verfahrens (200) gemäß einem der Ansprüche 8 bis 10 ausgebildet ist und/oder wobei die Rechnervorrichtung (18) zum Durchführen des computerimplementierten Verfahrens (100) gemäß einem der Ansprüche 1 bis 7 ausgebildet ist.

12. Anlage (30) zum Herstellen und/oder Behandeln mindestens eines Behälters (40), umfassend mindestens eine Verschließmaschine (32) zum Verschließen mindestens eines Behälters (40) mit einem Verschluss (42), einem Transportsystem (34) und ein System (10) zum Inspizieren mindestens eines mit einem Verschluss (42) verschlossenen Behälters (40) nach Anspruch 11, wobei das Transportsystem (34) die Verschließmaschine (32) mit dem System (10) verbindet und zum Transportieren von mit einem Verschluss (42) verschlossenen Behältern ausgebildet ist.

13. Computerprogrammprodukt umfassend auf einem Computer ausführbare Instruktionen, die bei Ausführung durch den Computer, den Computer dazu veranlassen, das computerimplementierte Verfahren (100) nach einem der Ansprüche 1 bis 8 durchzuführen.

## Claims

1. Computer-implemented method (100) for inspecting at least one closure (42) of a container (40), wherein the closure (42) extends along a longitudinal axis (48) of the container (40), and through a mouth of the container (40), comprising at least the following steps:
- receipt (102) of at least one spatially resolved image data record of a container (40) sealed with at least one closure (42);
- analysis (104) of the spatially resolved image data record with a first machine trained algorithm, as to whether the closure (42) has at least one element (44) which breaks at least one rotational symmetry of the closure (42) around the longitudinal axis (48); if the at least one element (44) is present (106):
- inspection (108) at least of the at least one element (44) by means of a second machine trained algorithm, as to whether at least one defect characteristic is present;
- if at least one defect characteristic is present (110):
- provision (112) of an ejection signal for the container (40);
- if no element (44) is present (114) that breaks at least one rotational symmetry of the closure (42) around the longitudinal axis (48):
- inspection (116) of the closure (42) with a first non machine trained algorithm, as to whether the closure (42) is arranged correctly on the container (40) and/or has at least one defect characteristic;
- if the closure (42) is not arranged correctly on the container (40) and/or if the closure (42) has at least one defect characteristic (118):
- provision (112) of an ejection signal for the container(40).

2. Computer-implemented method (100) according to claim 1, **characterised in that** the step of analysis (104) of the spatially resolved image data record also has the following sub-step:
- segmentation (120) of the at least one image data record in at least one first area which has at least one element (44), and at least one second area which is free of the at least one element (44).

3. Computer-implemented method (100) according to claim 2, **characterised in that** the at least one first area is inspected by means of the second machine trained algorithm.

4. Computer-implemented method (100) according to claim 2 or 3, **characterised in that** the at least one second area is inspected (122) by means of a second non machine trained algorithm as to whether at least one defect characteristic is present.

5. Computer-implemented method (100) according to one of claims 2 to 4, **characterised in that** all first areas and all second areas are inspected.

6. Computer-implemented method (100) according to one of the preceding claims, **characterised in that** the step (104) of analysis of the spatially resolved image data record has at least the following sub-steps:
- check (124) as to whether the closure (42) is configured as a tethered cap or sports cap;
- if the closure (42) is not configured as a tethered cap:
- carrying-out of the step of inspection (116) of the closure (42) with a first non machine trained algorithm;
- if the closure (42) is configured as a tethered cap(126):
- check (128) as to whether the closure (42) has at least one element (44) which breaks at least one rotational symmetry of the closure (42) around the longitudinal axis (48).

7. Computer-implemented method (100) according to one of the preceding claims, **characterised in that** the method is carried out sequentially for a multiplicity of received image data records of different containers (40).

8. Method (200) for the inspection of at least one container (40), comprising at least the following steps:
- transport (202) of the at least one container (40) sealed with a closure (42) to an inspection device (14);
- establishment (204) of at least one image data record of the container (40) by means of the inspection device (14);
- transfer (206) of the at least one image data record to a computer device (18) which carries out the computer-implemented method according to one of claims 1 to 7.

9. Method (200) according to claim 8 **characterised in that** the method also has at least the following step:
- receipt (208) of the ejection signal by means of an ejection device (16);
- ejection (210) of the relevant container (40) from the transport device (12) by means of the ejection device (16).

10. Method (200) according to claim 8 or 9, **characterised in that** a multiplicity of containers (40) sealed with in each case one closure (42) are transported by the transport device (12), one after the other to the inspection device (14).

11. System (10) for the inspection of at least one container (40) sealed with a closure (42), comprising at least one transport device (12) for transporting at least one container (40) along a transport direction (36), at least one inspection device (14) for inspecting the container (40), at least one ejection device (16) for ejecting the container (40) and at least one computer device (18), wherein the inspection device (14) is arranged on the transport device (12) and the ejection device (16) is arranged in the transport direction (36) after the inspection device (14) on the transport device (12), wherein the computer device (18) is connected and signals to the inspection device (14) and the ejection device (16) by means of at least one signal connection (20, 22), and wherein the system (10) is configured for carrying out the method (200) according to one of the claims 8 to 10 and/or wherein the computer device (18) is configured for carrying out the computer-implemented method (100) according to one of claims 1 to 7.

12. System (30) for manufacturing and/or handling at least one container (40), comprising at least one sealing machine (32) for sealing at least one container (40) with a closure (42), a transport system (34) and a system (10) for inspecting at least one container (40) sealed with a closure (42) according to claim 11, wherein the transport system (34) connects the sealing machine (32) to the system (10) and is configured to transport containers sealed with a closure (42).

13. Computer program product comprising instructions executable on a computer, wherein upon execution by the computer, they cause the computer to carry out the computer-implemented method (100) according to one of claims 1 to 8.

## Revendications

1. Procédé (100) mis en œuvre par ordinateur destiné à inspecter au moins un bouchon (42) d'un récipient (40), dans lequel le bouchon (42) s'étend sur le récipient (40) le long d'un axe longitudinal (48) qui s'étend à travers une embouchure du récipient (40), comprenant au moins les étapes suivantes :
- la réception (102) d'au moins un ensemble de données d'image à résolution spatiale d'un récipient (40) fermé par au moins un bouchon (42) ;
- l'analyse (104) de l'ensemble de données d'image à résolution spatiale avec un premier algorithme entraîné par machine pour déterminer si le bouchon (42) présente au moins un élément (44) qui rompt au moins une symétrie de rotation du bouchon (42) autour de l'axe longitudinal (48) ;
- si l'au moins un élément (44) est présent (106) :
- l'inspection (108) d'au moins l'au moins un élément (44) au moyen d'un deuxième algorithme entraîné par machine pour vérifier la présence d'au moins une caractéristique d'endommagement ;
- si au moins une caractéristique d'endommagement est présente (110) :
- la fourniture (112) d'un signal d'éjection pour le récipient (40) ;
- en l'absence (114) d'un élément (44) qui rompt au moins une symétrie de rotation du bouchon (42) autour de l'axe longitudinal (48) :
- l'inspection (116) du bouchon (42) avec un premier algorithme non entraîné par machine pour déterminer si le bouchon (42) est correctement disposé sur le récipient (40) et/ou présente au moins une caractéristique d'endommagement ;
- si le bouchon (42) n'est pas correctement disposé sur le récipient (40) et/ou si le bouchon (42) présente au moins une caractéristique d'endommagement (118) :
- la fourniture (112) d'un signal d'éjection pour le récipient (40).

2. Procédé (100) mis en œuvre par ordinateur selon la revendication 1, **caractérisé en ce que** l'étape d'analyse (104) de l'ensemble de données d'image à résolution spatiale présente en outre au moins la sous-étape suivante :
- la segmentation (120) de l'au moins un ensemble de données d'image en au moins une première zone, qui présente l'au moins un élément (44), et en au moins une deuxième zone, qui est dépourvue de l'au moins un élément (44).

3. Procédé (100) mis en œuvre par ordinateur selon la revendication 2, **caractérisé en ce que** l'au moins une première zone est inspectée au moyen du deuxième algorithme entraîné par machine.

4. Procédé (100) mis en œuvre par ordinateur selon la revendication 2 ou 3, **caractérisé en ce que** l'au moins une deuxième zone est inspectée (122) au moyen d'un deuxième algorithme non entraîné par machine pour déterminer si au moins une caractéristique d'endommagement est présente.

5. Procédé (100) mis en œuvre par ordinateur selon l'une quelconque des revendications 2 à 4, **caractérisé en ce que** toutes les premières zones et toutes les deuxièmes zones sont inspectées.

6. Procédé (100) mis en œuvre par ordinateur selon l'une quelconque des revendications précédentes, **caractérisé en ce que** l'étape (104) d'analyse de l'ensemble de données d'image à résolution spatiale présente au moins les sous-étapes suivantes :
- la vérification (124) si le bouchon (42) est conçu comme un bouchon attaché ou un bouchon de sport ;
- si le bouchon (42) n'est pas conçu comme un bouchon attaché :
- la réalisation de l'étape d'inspection (116) du bouchon (42) avec un premier algorithme non entraîné par machine ;
- si le bouchon (42) est conçu comme un bouchon attaché (126) :
- la vérification (128) si le bouchon (42) présente au moins un élément (44) qui rompt au moins une symétrie de rotation du bouchon (42) autour de l'axe longitudinal (48).

7. Procédé (100) mis en œuvre par ordinateur selon l'une quelconque des revendications précédentes, **caractérisé en ce que** le procédé est réalisé de manière séquentielle pour une pluralité d'ensembles de données d'image reçus de différents récipients (40).

8. Procédé (200) destiné à inspecter au moins un récipient (40), comprenant au moins les étapes suivantes :
- le transport (202) d'au moins un récipient (40) fermé par un bouchon (42) vers un dispositif d'inspection (14) ;
- la détermination (204) d'au moins un ensemble de données d'image du récipient (40) au moyen du dispositif d'inspection (14) ;
- la transmission (206) de l'au moins un ensemble de données d'image à un dispositif informatique (18) qui réalise le procédé mis en œuvre par ordinateur selon l'une quelconque des revendications 1 à 7.

9. Procédé (200) selon la revendication 8, **caractérisé en ce que** le procédé présente par ailleurs au moins l'étape suivante :
- la réception (208) du signal d'éjection au moyen d'un dispositif d'éjection (16) ;
- l'éjection (210) du récipient (40) concerné hors du dispositif de transport (12) au moyen du dispositif d'éjection (16).

10. Procédé (200) selon la revendication 8 ou 9, **caractérisé en ce qu'**une pluralité de récipients (40) fermés chacun par un bouchon (42) sont transportés successivement par le dispositif de transport (12) vers le dispositif d'inspection (14).

11. Système (10) d'inspection d'au moins un récipient (40) fermé par un bouchon (42), comprenant au moins un dispositif de transport (12) pour transporter au moins un récipient (40) le long d'une direction de transport (36), au moins un dispositif d'inspection (14) pour inspecter le récipient (40), au moins un dispositif d'éjection (16) pour éjecter le récipient (40) et au moins un dispositif informatique (18), dans lequel le dispositif d'inspection (14) est disposé sur le dispositif de transport (12) et le dispositif d'éjection (16) est disposé dans la direction de transport (36) derrière le dispositif d'inspection (14) sur le dispositif de transport (12), dans lequel le dispositif informatique (18) est connecté par une technique de signalisation au dispositif d'inspection (14) et au dispositif d'éjection (16) par l'intermédiaire d'au moins une liaison de signal (20, 22), et dans lequel le système (10) est conçu pour réaliser le procédé (200) selon l'une quelconque des revendications 8 à 10 et/ou dans lequel le dispositif informatique (18) est conçu pour réaliser le procédé (100) mis en œuvre par ordinateur selon l'une quelconque des revendications 1 à 7.

12. Installation (30) pour la fabrication et/ou le traitement d'au moins un récipient (40), comprenant au moins une machine de fermeture (32) pour fermer au moins un récipient (40) avec un bouchon (42), un système de transport (34) et un système (10) d'inspection d'au moins un récipient (40) fermé par un bouchon (42) selon la revendication 11, dans lequel le système de transport (34) connecte la machine de fermeture (32) au système (10) et est conçu pour transporter des récipients fermés par un bouchon (42).

13. Produit-programme d'ordinateur comprenant des instructions exécutables sur un ordinateur qui, lorsqu'elles sont exécutées par l'ordinateur, amènent l'ordinateur à réaliser le procédé (100) mis en œuvre par ordinateur selon l'une quelconque des revendications 1 à 8.
